# EUROPEAN PATENT APPLICATION

(11) **EP 4 618 276 A1**
(43) Date of publication of application: **17.09.2025**
(21) Application number: 23895673.4
(22) Date of filing: 15.02.2023
(51) Int. Cl.: H01M 50/233

(54) **LOWER CASE BODY OF BATTERY, BATTERY, AND ELECTRICAL APPARATUS**

(30) Priority: 01.12.2022 CN 202223199291 U
(71) Applicant: Contemporary Amperex Technology (Hong Kong) Limited, Hong Kong (HK)
(72) Inventor: YOU, Shubing, Ningde, Fujian 352100 (CN); ZHOU, Changyu, Ningde, Fujian 352100 (CN)
(74) Representative: Ziebig Hengelhaupt Intellectual Property Attorneys Patentanwaltskanzlei PartGmbB
(86) International application number: PCT/CN2023/076227
(87) International publication number: WO 2024/113497

(57) **Abstract**

This application provides a lower box body (100) of a battery (200), the battery (200), and an electric apparatus (300). The lower box body (100) of a battery (200) includes a bottom protection plate (10); a side beam (20), where the bottom protection plate (10) and the side beam (20) jointly define a mounting space (11) for mounting a battery cell (201) of the battery (200), an assembly cavity (21) is provided in the side beam (20), a reinforcing structure (22) is disposed in the assembly cavity (21), and the reinforcing structure (22) and the side beam (20) are integrally formed to divide the assembly cavity (21) into a plurality of sub-cavities (23); and a fastener (30), where the fastener (30) penetrates a bottom wall (27) of the side beam (20) and the bottom protection plate (10) and is connected to the reinforcing structure (22), so as to assemble the bottom protection plate (10) at the side beam (20).

## Description

### CROSS-REFERENCE TO RELATED APPLICATIONS

This application claims priority to Chinese Patent Application No. 202223199291.0, filed on December 1, 2022, which is incorporated herein by reference in its entirety.

### TECHNICAL FIELD

This application relates to the field of batteries, and in particular, to a lower box body of a battery, a battery, and an electric apparatus.

### BACKGROUND

In the related art, a battery includes a box and a battery cell, and the battery cell is mounted in the box. When the battery is subjected to a lateral impact, the side beam of the box has insufficient strength and deforms severely towards the interior of the battery, easily compressing the battery cell in the battery and causing thermal runaway of the battery cell, thus reducing the safety of the battery.

### SUMMARY

This application is intended to resolve at least one of the foregoing technical problems in the prior art. For this, an objective of this application is to provide a lower box body of a battery, such that when the lower box body is subjected to a lateral impact, the deformation amount of a side beam can be reduced, thus reducing the risk of the side beam compressing a battery cell in the battery and improving the use safety of the battery.

This application further provides a battery.

This application further provides an electric apparatus.

According to a first aspect, an embodiment of this application provides a lower box body of a battery, including:
a bottom protection plate;
a side beam, where the bottom protection plate and the side beam jointly define a mounting space for mounting a battery cell of the battery, an assembly cavity is provided in the side beam, a reinforcing structure is disposed in the assembly cavity, and the reinforcing structure and the side beam are integrally formed to divide the assembly cavity into a plurality of sub-cavities; and
a fastener, where the fastener penetrates a bottom wall of the side beam and the bottom protection plate and is connected to the reinforcing structure, so as to assemble the bottom protection plate at the side beam.

In the above technical solution, the fastener penetrates the bottom protection plate and the bottom wall of the side beam and is connected to the reinforcing structure, allowing the lower box body to enhance the structural strength and the capability of resistance to lateral impact. When the lower box body is subjected to a lateral impact, the deformation amount of the side beam can be reduced, thereby reducing the risk of the side beam compressing the battery cell in the battery and improving the use safety of the battery.

In some embodiments, the reinforcing structure includes a horizontal reinforcing portion, the horizontal reinforcing portion is connected between an inner side wall and an outer side wall of the side beam, and the fastener is connected to the horizontal reinforcing portion.

In the above technical solution, the fastener is connected to the horizontal reinforcing portion. When the lower box body is subjected to a lateral impact, the fastener bears force at a plurality of points, which can reduce the deformation amount of the side beam and reduce the risk of the side beam compressing the battery cell inside the battery. This also facilitates the connection between the fastener and the reinforcing structure.

In some embodiments, such horizontal reinforcing portion is provided in plurality, the plurality of horizontal reinforcing portions are sequentially spaced apart along a height direction of the side beam, and the fastener penetrates at least one of the horizontal reinforcing portions.

In the above technical solution, the fastener penetrates at least one horizontal reinforcing portion. When the lower box body is subjected to a lateral impact, it can be ensured that the fastener bears force at a plurality of points, effectively reducing the deformation amount of the side beam.

In some embodiments, a thickness of the bottom wall and/or a thickness of the inner side wall and/or a thickness of the horizontal reinforcing portion is D1, satisfying a relation: 2 mm≤D1≤5 mm.

In the above technical solution, with the thickness of the bottom wall and/or the thickness of the inner side wall and/or the thickness of the horizontal reinforcing portion set to be D1, the structural strength of the side beam can be enhanced. When the side beam is subjected to the same force, the deformation amount of the side beam can be reduced, further reducing the risk of the side beam compressing the battery cell in the battery.

In some embodiments, the reinforcing structure further includes a plurality of vertical reinforcing portions, the plurality of vertical reinforcing portions are sequentially spaced apart along a width direction of the side beam, the vertical reinforcing portions are each connected to at least one of the horizontal reinforcing portions, and at least one of the vertical reinforcing portions is connected to the side beam.

In the above technical solution, with the plurality of vertical reinforcing portions provided, the structural strength of the side beam can be further enhanced. When the side beam is subjected to the same force, the deformation amount of the side beam can be further reduced, further reducing the risk of the side beam compressing the battery cell in the battery.

In some embodiments, along the width direction of the side beam, a spacing distance between at least two adjacent vertical reinforcing portions of the plurality of the vertical reinforcing portions is L, satisfying a relation: 2 mm≤L≤5 mm.

In the above technical solution, with the spacing distance between at least adjacent two of the plurality of vertical reinforcing portions set to be L, the reinforcing structure can be stably supported within the side beam, further enhancing the structural strength of the side beam. When the lower box body is subjected to a lateral collision, the deformation amount of the side beam can be further reduced.

In some embodiments, the lower box body of a battery further includes a heat exchange member, the heat exchange member is disposed in the mounting space, and an edge of the heat exchange member is disposed between the side beam and the bottom protection plate.

In the above technical solution, the provision of the heat exchange member allows for regulation for the temperature of the battery cell, keeping the battery at an appropriate operating temperature. Additionally, placing the edge of the heat exchange member between the side beam and the bottom protection plate can further enhance the structural strength of the lower box body.

In some embodiments, the edge of the heat exchange member is provided with an avoidance portion for avoiding the fastener, and the fastener penetrates the avoidance portion.

In the above technical solution, the fastener penetrates the avoidance portion, ensuring that the fastener penetrates the heat exchange member, thereby avoiding interference between the heat exchange member and the fastener.

In some embodiments, the lower box body of a battery further includes a reinforcing strip, the reinforcing strip is disposed between the heat exchange member and the bottom protection plate, the fastener penetrates the reinforcing strip, and the reinforcing strip supports a lower surface of the heat exchange member.

In the above technical solution, the provision of the reinforcing strip can further enhance the structural strength of the side beam. Additionally, as the reinforcing strip supports the lower surface of the heat exchange member, the risk of deformation of the heat exchange member can be reduced when the weight of the battery cell acts on the heat exchange member.

In some embodiments, the reinforcing strip includes a support portion, the support portion is located in the mounting space, and the support portion supports the heat exchange member.

In the above technical solution, the support portion is provided to support the heat exchange member, achieving the effect of the reinforcing strip supporting the heat exchange member.

In some embodiments, the lower box body of a battery further includes a first sealing member, and the first sealing member is clamped between the reinforcing strip and the bottom protection plate.

In the above technical solution, the first sealing member is provided to seal the gap between the reinforcing strip and the bottom protection plate, preventing external substances from entering the mounting space between the reinforcing strip and the bottom protection plate, thus further improving the use safety of the battery.

In some embodiments, the reinforcing strip further includes a connection portion and an assembly portion, the connection portion is connected between the assembly portion and the support portion, such that the assembly portion is staggered with the support portion in a thickness direction of the reinforcing strip, the fastener penetrates the assembly portion, and the first sealing member is clamped between the assembly portion and the bottom protection plate.

In the above technical solution, with the assembly portion provided, the reinforcing strip can be stably assembled between the heat exchange member and the bottom protection plate. With the connection portion provided, the assembly portion can be staggered with the support portion in the thickness direction of the reinforcing strip. After the lower box body is assembled, the support portion is located lower than the assembly portion, enabling the reinforcing strip to form a stepped structure. The first sealing member is clamped between the assembly portion and the bottom protection plate, reducing the height dimensions of the lower box body and the battery. Moreover, the connection portion can limit the first sealing member, preventing the first sealing member from moving into the mounting space, such that the first sealing member is reliably mounted between the assembly portion and the bottom protection plate.

In some embodiments, an inner surface of the bottom protection plate has a mounting groove, and the first sealing member is mounted in the mounting groove.

In the above technical solution, the mounting groove is provided, and after the first sealing member is mounted in the mounting groove, the inner side wall of the mounting groove can limit the first sealing member, such that the first sealing member is more reliably mounted between the assembly portion and the bottom protection plate.

In some embodiments, the lower box body of a battery further includes a second sealing member, the second sealing member is clamped between the heat exchange member and the side beam, and the fastener penetrates the second sealing member.

In the above technical solution, the second sealing member is provided and clamped between the heat exchange member and the side beam. The second sealing member can seal the gap between the heat exchange member and the side beam, preventing external substances from entering the mounting space between the heat exchange member and the side beam, thereby further improving the use safety of the battery. Additionally, the fastener penetrates the second sealing member and can limit the movement of the second sealing member, such that the second sealing member is reliably clamped between the heat exchange member and the side beam.

In some embodiments, such fastener is provided in plurality, the plurality of fasteners are sequentially spaced apart along a circumferential direction of the lower box body, and a spacing distance between adjacent two of the fasteners is D2, satisfying 40 mm≤D2≤100 mm.

In the above technical solution, as the plurality of fasteners are provided and the spacing distance between two adjacent fasteners is set to be D2, the rigidity and strength of the lower box body can be further enhanced. When the lower box body is subjected to a lateral impact, the deformation amount of the side beam can be further reduced.

In some embodiments, the bottom protection plate is disposed below the side beam, and a turnup bending towards the side beam is provided at an edge of the bottom protection plate.

In the above technical solution, the turnup is provided at the edge of the bottom protection plate to block substances outside the battery from entering the battery between the side beam and the bottom protection plate.

In some embodiments, a surface of the side beam opposite the turnup has an avoidance groove, and the avoidance groove is opposite the turnup.

In the above technical solution, the avoidance groove is provided on the side beam to avoid interference between the turnup and the side beam.

According to a second aspect, an embodiment of this application provides a battery, including:
an upper cover;
a lower box body, where this lower box body is the lower box body of a battery described above, and the upper cover is connected to the lower box body to seal an opening end of the mounting space; and
a battery cell, where the battery cell is mounted in the mounting space.

According to a third aspect, an embodiment of his application provides an electric apparatus including the foregoing battery.

For additional aspects and advantages of this application, some will be given in the following description, and some will become apparent in the following description or will be understood in the practice of this application.

### BRIEF DESCRIPTION OF DRAWINGS

FIG. 1 is a schematic diagram of a vehicle according to an embodiment of this application.
FIG. 2 is a three-dimensional diagram of a battery according to an embodiment of this application.
FIG. 3 is a top view of a battery according to an embodiment of this application.
FIG. 4 is a cross-sectional view taken along line A-A in FIG. 3.
FIG. 5 is an enlarged view at B in FIG. 4.
FIG. 6 is an exploded view of a battery according to an embodiment of this application.
FIG. 7 is an enlarged view at C in FIG. 6.
FIG. 8 is a cross-sectional view of a side beam according to an embodiment of this application.
FIG. 9 is a schematic diagram of a reinforcing strip according to an embodiment of this application.
FIG. 10 is an enlarged view at E in FIG. 9.
FIG. 11 is a schematic diagram of a bottom protection plate according to an embodiment of this application.
FIG. 12 is an enlarged view at F in FIG. 11.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell 201 in the battery 200 may be cylindrical, flat, rectangular, or of another shape, and this is also not limited in the embodiments of this application. The battery cells 201 are usually categorized into three types depending on their packaging: a cylinder battery cell 201, a prismatic battery cell 201, and a pouch battery cell 201, and this is also not limited in the embodiments of this application.

The battery 200 mentioned in this embodiment of this application is a single physical module that includes one or more battery cells 201 for providing a higher voltage and capacity. For example, the battery 200 mentioned in this application may include a battery module or a battery cell 201. The battery 200 typically includes a box for packaging one or more battery cells 201 or a plurality of battery modules. The box can prevent a liquid or another foreign matter from affecting charge or discharge of the battery cells 201.

The battery cell 201 may include a housing, an electrode assembly, and an electrolyte, where the housing is used for accommodating the electrode assembly and the electrolyte. The electrode assembly includes a positive electrode plate, a negative electrode plate, and a separator. The battery cell 201 mainly works relying on migration of metal ions between the positive electrode plate and the negative electrode plate. The positive electrode plate includes a positive electrode current collector and a positive electrode active substance layer. The positive electrode active substance layer is applied to a surface of the positive electrode current collector. Part of the positive electrode current collector uncoated with the positive electrode active substance layer protrudes out of part of the positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied to a surface of the negative electrode current collector. Part of the negative electrode current collector uncoated with the negative electrode active substance layer protrudes out of part of the negative electrode current collector coated with the negative electrode active substance layer and serves as a negative electrode tab. The negative electrode current collector may be made of copper, and the negative electrode active substance may be carbon, silicon, or the like.

The separator may be made of PP (polypropylene, polypropylene), PE (polyethylene, polyethylene), or the like. In addition, the electrode assembly may be a wound structure or a stacked structure. However, the embodiments of this application are not limited thereto.

The existing battery includes a box and a battery cell, and the battery cell is mounted in the box. When the battery is subjected to a lateral impact, the side beam of the box has insufficient strength and deforms severely towards the interior of the battery, easily compressing the battery cell in the battery and causing thermal runaway of the battery cell, thus reducing the safety of the battery.

Based on the above consideration, to resolve the problem of insufficient strength of the box of the battery 200, the inventors of this application, after in-depth research, have designed a lower box body 100 of a battery 200. A fastener 30 penetrates the bottom protection plate 10 and the bottom wall 27 of the side beam 20 and is connected to the reinforcing structure 22, allowing the lower box body 100 to enhance the structural strength and the capability of resistance to lateral impact. When the lower box body 100 is subjected to a lateral impact, the deformation amount of the side beam 20 can be reduced, thereby reducing the risk of the side beam 20 compressing the battery cell 201 in the battery 200 and improving the use safety of the battery 200.

The battery 200 disclosed in the embodiments of this application may be used without limitation in electric apparatuses 300 such as vehicles, ships, or aircrafts. The battery 200 disclosed in this application may be used to constitute a power supply system of the electric apparatus 300. This helps to expand the application range of the battery 200 and reduce the assembly difficulty of the battery 200.

An embodiment of this application provides an electric apparatus 300 that uses a battery 200 as a power source. The electric apparatus 300 may be but is not limited to a mobile phone, a tablet, a laptop computer, an electric toy, an electric tool, an electric bicycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus 300 of an embodiment of this application being a vehicle is used as an example for description of the following embodiments.

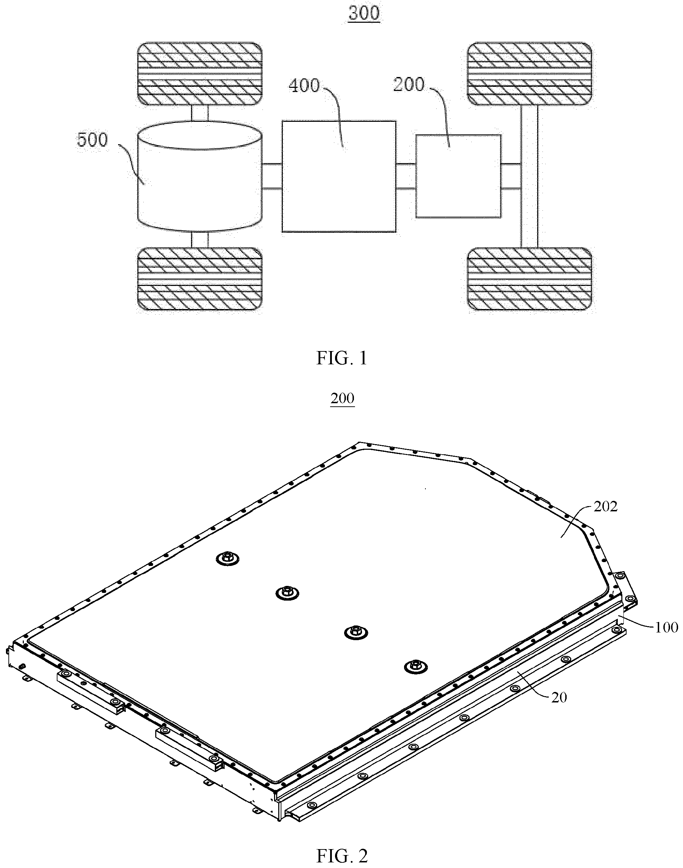

Referring to FIG. 1, FIG. 1 is a schematic structural diagram of a vehicle according to some embodiments of this application. The vehicle may be an oil-fueled vehicle, a gas-powered vehicle, or a new energy vehicle. The new energy vehicle may be a battery electric vehicle, a hybrid electric vehicle, an extended-range electric vehicle, or the like. The vehicle is provided with a battery 200 inside, where the battery 200 may be disposed at the bottom, front, or rear of the vehicle. The battery 200 may be configured to supply power to the vehicle. For example, the battery 200 may be used as an operational power source for the vehicle. The vehicle may further include a controller 400 and a motor 500, where the controller 400 is configured to control the battery 200 to supply power to the motor 500, for example, to satisfy operating power needs during start, navigation, and traveling of the vehicle.

In some embodiments of this application, the battery 200 can be used as not only the operational power source for the vehicle but also a driving power source for the vehicle, replacing or partially replacing fossil fuel or natural gas to provide driving traction for the vehicle.

The battery 200 provided in some embodiments of this application includes the battery cell 201 or the battery module described in the above embodiments. The battery cell 201 or battery module is mounted in a box of the battery 200. The box is used to provide an assembly space for the battery cell 201 and can have various structures. In some embodiments, the box may include an upper cover 202 and a lower box body 100. The upper cover 202 and the lower box body 100 fit together so that the upper cover 202 and the lower box body 100 jointly define a cavity for accommodating the battery cell 201. The lower box body 100 may be a hollow structure with one end open, and the upper cover 202 covers the open side of the lower box body 100, so that the upper cover 202 and the lower box body 100 jointly define a cavity. The upper cover 202 and the lower box body 100 may further both be hollow structures with one side open, with the open side of the upper cover 202 covering the open side of the lower box body 100. Certainly, the box formed by the upper cover 202 and the lower box body 100 may be in a variety of shapes, such as a cylinder and a cuboid.

In the battery 200, the plurality of battery cells 201 may be connected in series, parallel, or series-parallel, where being connected in series-parallel means a combination of series and parallel connections of the plurality of battery cells 201. The plurality of battery cells 201 may be directly connected in series, parallel, or series-parallel, and then an entirety of the plurality of battery cells 201 is accommodated in the box; or certainly, the battery 200 may be formed by a plurality of battery cells 201 being connected in series, parallel, or series-parallel first to form a battery module and then a plurality of battery modules being connected in series, parallel, or series-parallel to form an entirety which is accommodated in the box. The battery 200 may further include other structures. For example, the battery 200 may further include a busbar configured to implement electrical connection between the plurality of battery cells 201.

The battery module provided in some embodiments of this application includes the above battery cell 201. The battery module may include a plurality of battery cells 201, end plates, and side plates, with the plurality of battery cells 201 fixed between the end plates and side plates.

The following describes the lower box body 100 of the battery 200 in the embodiments of this application with reference to FIGs. 2 to 12.

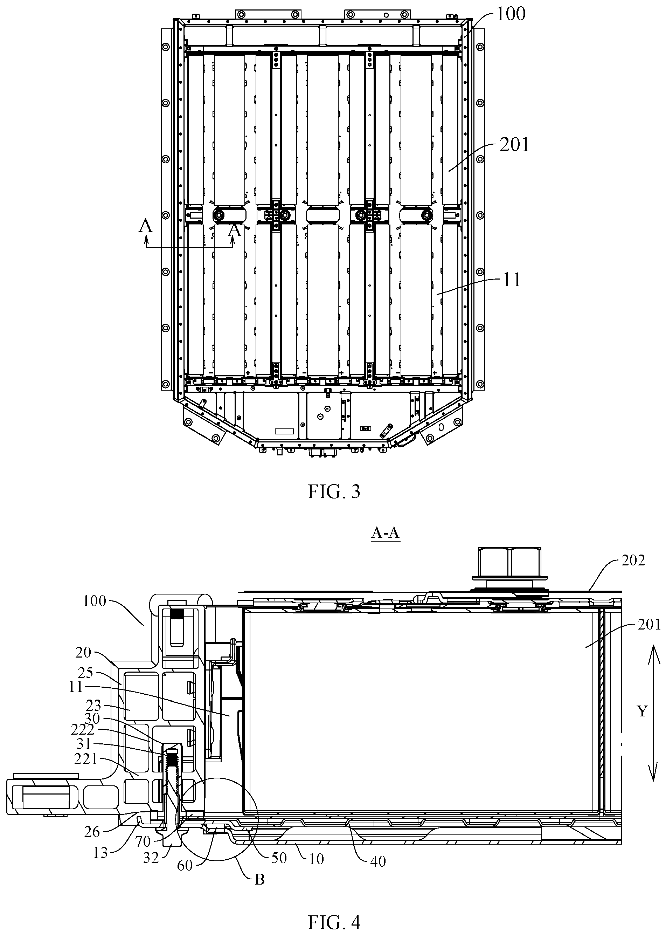

As shown in FIGs. 4, 7, and 8, according to some embodiments of this application, the lower box body 100 includes a bottom protection plate 10, a side beam 20, and a fastener 30. The bottom protection plate 10 and the side beam 20 jointly define a mounting space 11 for mounting a battery cell 201 of the battery 200. In other words, the bottom protection plate 10 and the side beam 20 jointly define the mounting space 11, and the battery cell 201 is mounted in the mounting space 11. The side beam 20 has an assembly cavity 21. It can also be understood that the side beam 20 defines the assembly cavity 21, and a reinforcing structure 22 is disposed in the assembly cavity 21. The reinforcing structure 22 and the side beam 20 are fixedly connected and integrated into a whole. The reinforcing structure 22 can divide the assembly cavity 21 into a plurality of sub-cavities 23, so that the cross-section of the side beam 20 is of a multi-cavity structure, enhancing the structural strength of the side beam 20. The fastener 30 penetrates a bottom wall 27 of the side beam 20 and the bottom protection plate 10 and is connected to the reinforcing structure 22, thereby assembling the bottom protection plate 10 to the side beam 20 and fixing them together.

After the lower box body 100 is assembled, the fastener 30 penetrates the bottom protection plate 10 and the bottom wall 27 of the side beam 20. The fastener 30 extends into the assembly cavity 21 and is connected to the reinforcing structure 22 (for example, by riveting, screwing, or welding), such that the lower box body 100 can enhance the structural strength and the capability of resistance to lateral impact. When the lower box body 100 is subjected to a lateral impact, the fastener 30 contacts the bottom protection plate 10, the bottom wall 27 of the side beam 20, and the reinforcing structure 22, and the reinforcing structure 22 provides a plurality of stress points for the fastener 30, such that the fastener 30 is subjected to force at a plurality of points. Compared to the prior art, this design can reduce the deformation amount of the side beam 20 towards the mounting space 11, reducing the risk of the side beam 20 compressing the battery cell 201 in the battery 200. This reduces the risk of thermal runaway of the battery cell 201 due to compression, thereby improving the use safety of the battery 200.

Furthermore, the fastener 30 may include a first sub-fastener 31 and a second sub-fastener 32. The first sub-fastener 31 may be pre-embedded in the side beam 20, penetrating the bottom wall 27 of the side beam 20 to be connected to the reinforcing structure 22. For example, the first sub-fastener 31 may be a pull rivet nut, which is used as an example for description in this application. The pull rivet nut is pre-embedded in the side beam 20. During the assembly process of the bottom protection plate 10 and the side beam 20, the second sub-fastener 32 (for example, a bolt or screw) penetrates the bottom protection plate 10 to be connected to the first sub-fastener 31, securely mounting the bottom protection plate 10 to the side beam 20. The second sub-fastener 32 being a bolt is used as an example for description in this application. Additionally, the fastener 30 may be made of steel to enhance the load-bearing capacity of the fastener 30 and reduce the risk of deformation and breakage of the fastener 30.

In the above technical solution, the fastener 30 penetrates the bottom protection plate 10 and the bottom wall 27 of the side beam 20 and is connected to the reinforcing structure 22, allowing the lower box body 100 to enhance the structural strength and the capability of resistance to lateral impact. When the lower box body 100 is subjected to a lateral impact, the deformation amount of the side beam 20 can be reduced, thereby reducing the risk of the side beam 20 compressing the battery cell 201 in the battery 200 and improving the use safety of the battery 200.

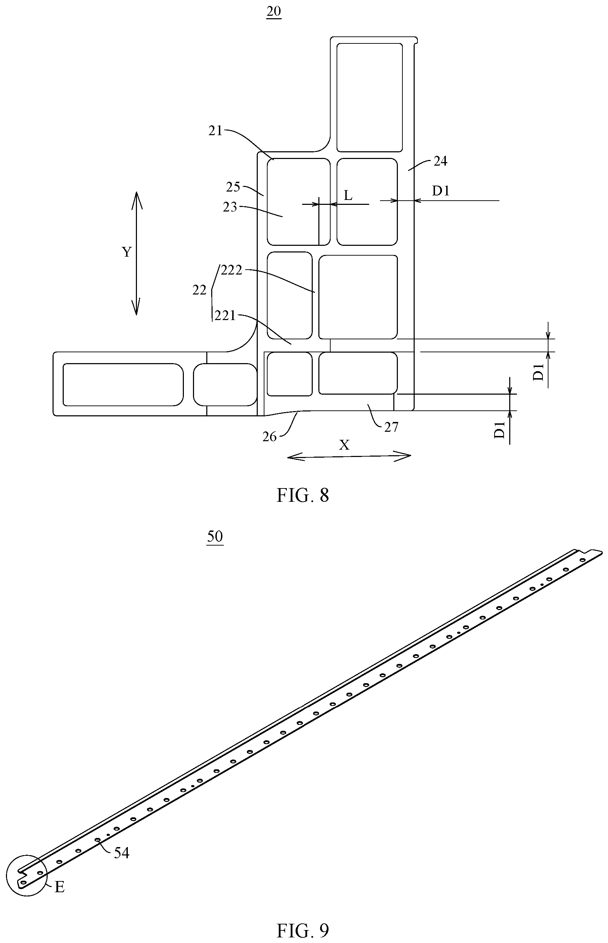

According to some embodiments of this application, as shown in FIGs. 4 and 8, the reinforcing structure 22 may include a horizontal reinforcing portion 221. The horizontal reinforcing portion 221 is connected between an inner side wall 24 and an outer side wall 25 of the side beam 20, and the fastener 30 is connected to the horizontal reinforcing portion 221. As shown in FIG. 8, in the width direction of the side beam 20, the width direction of the side beam 20 refers to direction X in FIG. 8, and the side beam 20 includes the inner side wall 24 and the outer side wall 25 disposed opposite to each other. As shown in FIG. 4, the inner side wall 24 is located on the inner side of the outer side wall 25. The horizontal reinforcing portion 221 may be arranged as a plate-like structure and connected between the inner side wall 24 and the outer side wall 25 of the side beam 20. The first sub-fastener 31 of the fastener 30 may penetrate both the bottom wall 27 of the side beam 20 and the horizontal reinforcing portion 221 simultaneously. However, this application is not limited thereto; the first sub-fastener 31 may not necessarily penetrate the horizontal reinforcing portion 221, as long as the first sub-fastener 31 is connected to the horizontal reinforcing portion 221. The first sub-fastener 31 penetrating the horizontal reinforcing portion 221 is used as an example for description in this application, where the first sub-fastener 31 can be fixedly connected to the horizontal reinforcing portion 221. As the fastener 30 is connected to the horizontal reinforcing portion 221, when the lower box body 100 is subjected to a lateral impact, it can be ensured that the fastener 30 bears force at a plurality of points, effectively reducing the deformation amount of the side beam 20 and the risk of the side beam 20 compressing the battery cell 201 in the battery 200. Additionally, the first sub-fastener 31 penetrates the bottom wall 27 of the side beam 20 and is connected between the inner side wall 24 and the outer side wall 25 of the side beam 20 via the horizontal reinforcing portion 221, facilitating connection between the fastener 30 and the reinforcing structure 22.

According to some embodiments of this application, as shown in FIGs. 4 and 8, the horizontal reinforcing portion 221 may be provided in plurality. The plurality of horizontal reinforcing portions 221 are sequentially spaced apart along the height direction of the side beam 20, where the height direction of the side beam 20 refers to direction Y of the side beam 20 in FIG. 8. The fastener 30 penetrates at least one of the horizontal reinforcing portions 221. Furthermore, the plurality of horizontal reinforcing portions 221 are parallel to each other, or two adjacent horizontal reinforcing portions 221 are approximately parallel. The plurality of horizontal reinforcing portions 221 are all parallel to direction X in FIG. 8. Furthermore, the horizontal reinforcing portion 221 adjacent to the bottom wall 27 of the side beam 20 is spaced apart from the bottom wall 27 of the side beam 20. The first sub-fastener 31 penetrates the bottom wall 27 of the side beam 20 and at least one of the horizontal reinforcing portions 221. As shown in FIG. 4, the first sub-fastener 31 penetrates the horizontal reinforcing portion 221 adjacent to the bottom wall 27 of the side beam 20. It can also be understood that the first sub-fastener 31 penetrates the horizontal reinforcing portion 221 at the lowest position. When the lower box body 100 is subjected to a lateral impact, the horizontal reinforcing portion 221 supports the fastener 30, ensuring that the fastener 30 bears force at a plurality of points, and effectively reducing the deformation amount of the side beam 20.

According to some embodiments of this application, as shown in FIG. 8, the thickness of the bottom wall 27 and/or the thickness of the inner side wall 24 and/or the thickness of the horizontal reinforcing portion 221 is D1, satisfying the relation: 2 mm≤D1≤5 mm. For example, D1 may be set to a value such as 2 mm, 3 mm, 4 mm, 5 mm, or the like. It should be explained that the thickness dimension of the bottom wall 27 of the side beam 20 and/or the thickness dimension of the inner side wall 24 of the side beam 20 and/or the thickness dimension of the horizontal reinforcing portion 221 is D1. Furthermore, the thickness dimension of the bottom wall 27 of the side beam 20, the thickness dimension of the inner side wall 24 of the side beam 20, and the thickness dimension of the horizontal reinforcing portion 221 are the same. Setting the thickness dimension of the bottom wall 27 of the side beam 20, the thickness dimension of the inner side wall 24 of the side beam 20, and the thickness dimension of the horizontal reinforcing portion 221 to 2 mm-5 mm can enhance the structural strength of the side beam 20 and facilitates the lightweight design of the side beam 20. When the side beam 20 is subjected to the same magnitude of force, the deformation amount of the side beam 20 can be reduced, further reducing the risk of the side beam 20 compressing the battery cell 201 in the battery 200.

According to some embodiments of this application, as shown in FIGs. 4 and 8, the reinforcing structure 22 may further include a plurality of vertical reinforcing portions 222. The plurality of vertical reinforcing portions 222 are sequentially spaced apart along the width direction of the side beam 20, where the width direction of the side beam 20 refers to direction X in FIG. 8. The vertical reinforcing portions 222 are each connected to at least one horizontal reinforcing portion 221, and at least one vertical reinforcing portion 222 is connected to the side beam 20. The plurality of vertical reinforcing portions 222 extend along the height direction of the side beam 20. Furthermore, the vertical reinforcing portion 222 is constructed as a plate-like structure. At least one vertical reinforcing portion 222 may be arranged to intersect with at least one horizontal reinforcing portion 221. The vertical reinforcing portion 222 adjacent to the inner side wall 24 of the side beam 20 may be spaced apart from the inner side wall 24 of the side beam 20, and the vertical reinforcing portion 222 adjacent to the outer side wall 25 of the side beam 20 may be spaced apart from the outer side wall 25 of the side beam 20.

As shown in FIG. 8, two vertical reinforcing portions 222 being provided is used as an example in this application. The two vertical reinforcing portions 222 are spaced apart along the width direction of the side beam 20. The two vertical reinforcing portions 222 are respectively a first vertical reinforcing portion 222 and a second vertical reinforcing portion 222. The first vertical reinforcing portion 222 intersects with the lowest horizontal reinforcing portion 221. The lower end of the first vertical reinforcing portion 222 is connected to the bottom wall 27 of the side beam 20, and the upper end of the first vertical reinforcing portion 222 is connected to another horizontal reinforcing portion 221. The second vertical reinforcing portion 222 and the first vertical reinforcing portion 222 are staggered in the height direction of the side beam 20. The lower end of the second vertical reinforcing portion 222 is connected to the horizontal reinforcing portion 221, and the upper end of the second vertical reinforcing portion 222 is connected to the side beam 20. With the plurality of vertical reinforcing portions 222 provided, the structural strength of the side beam 20 can be further enhanced. When the side beam 20 is subjected to the same force, the deformation amount of the side beam 20 can be further reduced, further reducing the risk of the side beam 20 compressing the battery cell 201 in the battery 200.

According to some embodiments of this application, as shown in FIG. 8, along the width direction of the side beam 20, the spacing distance between at least two adjacent vertical reinforcing portions 222 of the plurality of vertical reinforcing portions 222 is L, satisfying the relation: 2 mm≤L≤5 mm. L may be set to a value such as 2 mm, 3 mm, 4 mm, or 5 mm. With the spacing distance between at least adjacent two of the plurality of vertical reinforcing portions 222 set to be L, the reinforcing structure 22 can be stably supported within the side beam 20, further enhancing the structural strength of the side beam 20. When the lower box body 100 is subjected to a lateral collision, the deformation amount of the side beam 20 can be further reduced, more effectively reducing the risk of the side beam 20 compressing the battery cell 201.

According to some embodiments of this application, as shown in FIGs. 4, 5, and 7, the lower box body 100 may further include a heat exchange member 40. The heat exchange member 40 may be disposed in the mounting space 11, and the edge of the heat exchange member 40 may be disposed between the side beam 20 and the bottom protection plate 10. Furthermore, the heat exchange member 40 may be arranged as a heat exchange plate, with a heat exchange channel disposed therein. A heat exchange medium can flow in the heat exchange channel. When the heat exchange medium flows in the heat exchange channel, the heat exchange member 40 can exchange heat with the battery cell 201, enabling the regulation of the temperature of the battery cell 201, thereby keeping the battery 200 at an appropriate operating temperature. Moreover, because the heat exchange member 40 has certain structural strength, arranging the edge of the heat exchange member 40 between the side beam 20 and the bottom protection plate 10 can further enhance the structural strength of the lower box body 100, and when the lower box body 100 is subjected to a lateral impact, reduces the risk of deformation of the heat exchange member 40 and the deformation amount of the heat exchange member 40.

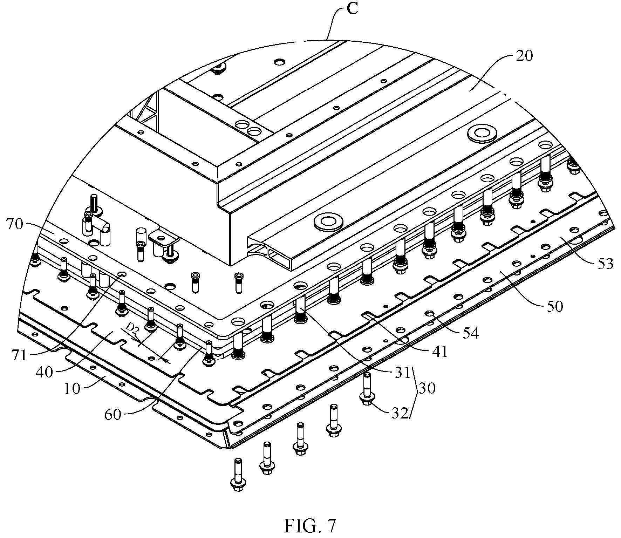

According to some embodiments of this application, as shown in FIG. 7, the edge of the heat exchange member 40 may have an avoidance portion 41 for avoiding the fastener 30, and the fastener 30 penetrates the avoidance portion 41. Furthermore, the avoidance portion 41 may be arranged as an avoidance hole or an avoidance notch. As shown in FIG. 7, the avoidance portion 41 being arranged as an avoidance notch is used as an example for description in this application. The second sub-fastener 32 of the fastener 30 penetrates the avoidance portion 41. The provision of the avoidance portion 41 can ensure that the fastener 30 penetrates the heat exchange member 40, avoiding interference between the heat exchange member 40 and the fastener 30, thus reducing the assembly difficulty of the lower box body 100 and improving the assembly efficiency of the lower box body 100.

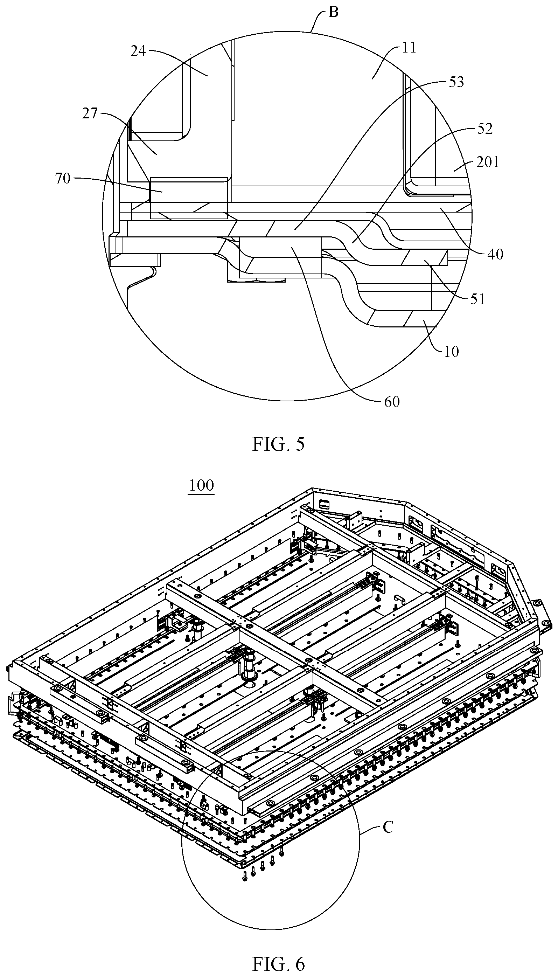

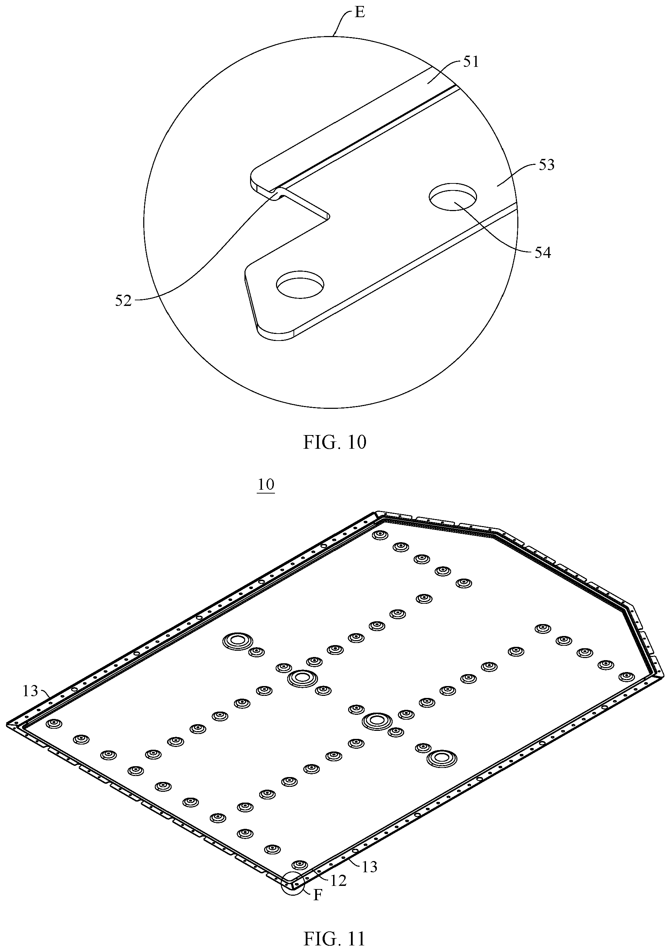

According to some embodiments of this application, as shown in FIGs. 4 and 5, the lower box body 100 may further include a reinforcing strip 50. The reinforcing strip 50 may be arranged as a metal component, and may be disposed between the heat exchange member 40 and the bottom protection plate 10. The fastener 30 penetrates the reinforcing strip 50, and the reinforcing strip 50 supports the lower surface of the heat exchange member 40. As shown in FIG. 10, the reinforcing strip 50 may be provided with a first through-hole 54. The first through-hole 54 penetrates the reinforcing strip 50 in the thickness direction of the reinforcing strip 50. The second sub-fastener 32 is disposed in the first through-hole 54. As the second sub-fastener 32 and the inner side wall 24 of the first through-hole 54 are limited, the reinforcing strip 50 can be securely assembled between the heat exchange member 40 and the bottom protection plate 10. Due to the structural strength of the reinforcing strip 50, the structural strength of the side beam 20 can be enhanced. Furthermore, as the reinforcing strip 50 supports the lower surface of the heat exchange member 40, the risk of deformation of the heat exchange member 40 can be reduced when the weight of the battery cell 201 acts on the heat exchange member 40.

According to some embodiments of this application, as shown in FIGs. 5 and 10, the reinforcing strip 50 includes a support portion 51. The support portion 51 is located in the mounting space 11, and supports the heat exchange member 40. The support portion 51 may be arranged as a plate-like structure. After the lower box body 100 is assembled, the reinforcing strip 50 is assembled between the heat exchange member 40 and the bottom protection plate 10. The support portion 51 is located in the mounting space 11 and below the heat exchange member 40, and abuts against the lower surface of the heat exchange member 40. The support portion 51 is provided to support the heat exchange member 40, achieving the effect of the reinforcing strip 50 supporting the heat exchange member 40.

According to some embodiments of this application, as shown in FIGs. 5 and 7, the lower box body 100 may further include a first sealing member 60. The first sealing member 60 may be arranged as a rubber component, but this application is not limited thereto. The first sealing member 60 may further be arranged as a sealing member made of another material. The first sealing member 60 is clamped between the reinforcing strip 50 and the bottom protection plate 10. The first sealing member 60 may be of an annular structure, and the width of the first sealing member 60 may be greater than or equal to 7 mm. The upper limit value of the width dimension of the first sealing member 60 is reasonably set based on actual conditions. As the first sealing member 60 is arranged between the reinforcing strip 50 and the bottom protection plate 10, the first sealing member 60 can seal the gap between the reinforcing strip 50 and the bottom protection plate 10, preventing substances outside the battery 200 from entering the mounting space 11 between the reinforcing strip 50 and the bottom protection plate 10. This can meet the IPX8 waterproof requirement between the bottom protection plate 10 and the heat exchange member 40, further enhancing the use safety of the battery 200.

According to some embodiments of this application, as shown in FIGs. 5 and 10, the reinforcing strip 50 may further include a connection portion 52 and an assembly portion 53. The connection portion 52 is connected between the assembly portion 53 and the support portion 51, so that the assembly portion 53 and the support portion 51 are staggered in the thickness direction of the reinforcing strip 50. The fastener 30 penetrates the assembly portion 53, and the first sealing member 60 is clamped between the assembly portion 53 and the bottom protection plate 10. As shown in FIG. 10, the first through-hole 54 is provided on the assembly portion 53. The second sub-fastener 32 penetrates into the first through-hole 54 on the assembly portion 53. With the assembly portion 53 provided, the reinforcing strip 50 can be stably assembled between the heat exchange member 40 and the bottom protection plate 10. With the connection portion 52 provided, the assembly portion 53 can be staggered with the support portion 51 in the thickness direction of the reinforcing strip 50. After the lower box body 100 is assembled, the support portion 51 is located lower than the assembly portion 53, enabling the reinforcing strip 50 to form a stepped structure. The first sealing member 60 and the assembly portion 53 are arranged correspondingly. The first sealing member 60 is clamped between the assembly portion 53 and the bottom protection plate 10, reducing the height dimensions of the lower box body 100 and the battery 200. Moreover, the connection portion 52 is located on an inner side of the first sealing member 60. When the first sealing member 60 contacts the connection portion 52, the connection portion 52 can limit the position of the first sealing member 60, preventing the first sealing member 60 from moving into the mounting space 11, such that the first sealing member 60 is reliably mounted between the assembly portion 53 and the bottom protection plate 10.

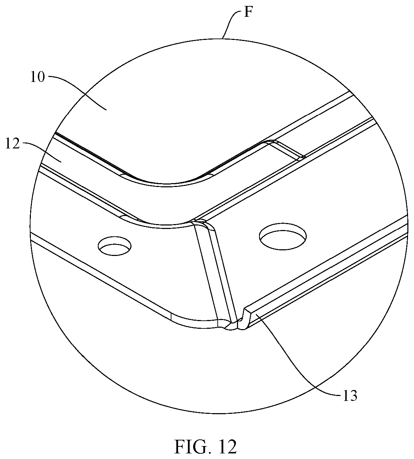

According to some embodiments of this application, as shown in FIGs. 11 and 12, the inner surface of the bottom protection plate 10 may have a mounting groove 12. It can also be understood that the upper surface of the bottom protection plate 10 may have the mounting groove 12, and the first sealing member 60 is mounted in the mounting groove 12. The shape of the mounting groove 12 may adapt to the shape of the first sealing member 60. The mounting groove 12 may be arranged as an annular groove, close to an edge of the bottom protection plate 10 and extending circumferentially along the bottom protection plate 10. The mounting groove 12 is provided, and after the first sealing member 60 is mounted in the mounting groove 12, the inner side wall of the mounting groove 12 can limit the first sealing member 60, such that the first sealing member 60 is more reliably mounted between the assembly portion 53 and the bottom protection plate 10, effectively preventing the first sealing member 60 from shifting.

According to some embodiments of this application, as shown in FIGs. 5 and 7, the lower box body 100 may further include a second sealing member 70. The second sealing member 70 may be arranged as an annular component and may be made of rubber, but this application is not limited thereto. The second sealing member 70 may further be made of another material. The second sealing member 70 is clamped between the heat exchange member 40 and the side beam 20, and the fastener 30 penetrates the second sealing member 70. The second sealing member 70 may be provided with a second through-hole 71, and the fastener 30 penetrates the second through-hole 71. The second sealing member 70 is provided and clamped between the heat exchange member 40 and the side beam 20. The second sealing member 70 can seal the gap between the heat exchange member 40 and the side beam 20, preventing substances outside the battery 200 from entering the mounting space 11 between the heat exchange member 40 and the side beam 20, thereby further improving the use safety of the battery 200. Additionally, the fastener 30 penetrates the second sealing member 70 and can limit the movement of the second sealing member 70, such that the second sealing member 70 is reliably clamped between the heat exchange member 40 and the side beam 20. This ensures that the second sealing member 70 reliably seals the gap between the heat exchange member 40 and the side beam 20, improving the sealing performance of the lower box body 100, thereby improving the sealing performance of the battery 200.

According to some embodiments of this application, as shown in FIGs. 6 and 7, the fastener 30 may be provided in plurality. The plurality of fasteners 30 are sequentially spaced apart along the circumferential direction of the lower box body 100. The spacing distance between adjacent fasteners 30 is D2, satisfying the relation: 40 mm≤D2≤100 mm. For example, D2 may be 40 mm, 50 mm, 60 mm, 70 mm, 80 mm, 90 mm, or 100 mm. Furthermore, 40 mm≤D2≤60 mm. For example, D2 may be 40 mm, 50 mm, or 60 mm. As the plurality of fasteners 30 are provided and the spacing distance between two adjacent fasteners 30 is set to be D2, the rigidity and strength of the lower box body 100 can be further enhanced. Additionally, the shear force that the fastener 30 can withstand is greater than the force that the side beam 20 can withstand. When the lower box body 100 is subjected to a lateral impact, the deformation amount of the side beam 20 can be further reduced.

According to some embodiments of this application, as shown in FIG. 4 and FIG. 12, the bottom protection plate 10 is disposed below the side beam 20, and a turnup 13 bending towards the side beam 20 may be provided at the edge of the bottom protection plate 10. The edge of the bottom protection plate 10 may extend beyond the side beam 20, and the turnup 13 may bend towards the outer side wall 25 of the side beam 20. Alternatively, as shown in FIG. 4, if the edge of the bottom protection plate 10 does not extend beyond the side beam 20, the turnup 13 may bend towards the bottom wall 27 of the side beam 20. The turnup 13 bending towards the bottom wall 27 of the side beam 20 is used as an example for description in this application. As the turnup 13 is provided at the edge of the bottom protection plate 10, the turnup 13 can block substances outside the battery 200 from entering the battery 200 through the space between the side beam 20 and the bottom protection plate 10. For example, the turnup 13 can block liquid, reducing the risk of liquid entering the battery 200 from the space between the side beam 20 and the bottom protection plate 10.

According to some embodiments of this application, as shown in FIG. 4 and FIG. 8, the surface of the side beam 20 opposite the turnup 13 may have an avoidance groove 26, and the avoidance groove 26 is opposite the turnup 13. Further, the avoidance groove 26 may be arranged as an arc-shaped groove. For example, the avoidance groove 26 may be arranged as a circular arc-shaped groove. As shown in FIG. 4, the lower surface of the bottom wall 27 of the side beam 20 is provided with an avoidance groove 26, and the avoidance groove 26 is opposite the turnup 13. The avoidance groove 26 is provided on the side beam 20 for avoiding the turnup 13, which can prevent interference between the turnup 13 and the side beam 20.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

According to some embodiments of this application, this application also provides a battery 200 including an upper cover 202, a lower box body 100, and a battery cell 201. The lower box body 100 is the lower box body 100 of the battery 200 in the above embodiments. The upper cover 202 is connected to the lower box body 100 to seal the open end of the mounting space 11, so that the upper cover 202 and the lower box body 100 jointly define a cavity, and the battery cell 201 is mounted in the mounting space 11. It can also be understood that the battery cell 201 is mounted in the cavity. The lower box body 100 in the above embodiment is disposed on the battery 200, allowing the battery 200 to enhance the structural strength and the capability of resistance to lateral impact. When the lower box body 200 is subjected to a lateral impact, the deformation amount of the side beam 20 can be reduced, thereby reducing the risk of the side beam 20 compressing the battery cell 201 in the battery 200 and improving the use safety of the battery 200.

According to some embodiments of this application, this application also provides an electric apparatus 300, which includes the battery 200 of the above embodiment. The battery 200 is used to provide power to the electric apparatus 300. The electric apparatus 300 may be any device or system that uses the battery 200. Mounting the battery 200 on the electric apparatus 300 helps to improve the production efficiency and product qualification rate of the electric apparatus 300.

The battery 200 of this application is described below with reference to FIGs. 4 and 5.

The battery 200 includes an upper cover 202, a lower box body 100, and a battery cell 201. The upper cover 202 is connected to the lower box body 100 to seal the open end of the mounting space 11, so that the upper cover 202 and the lower box body 100 jointly define a cavity, and the battery cell 201 is mounted in the mounting space 11. The lower box body 100 includes a bottom protection plate 10, a side beam 20, a heat exchange member 40, a reinforcing strip 50, a first sealing member 60, a second sealing member 70, and a fastener 30. The side beam 20 has an assembly cavity 21, in which a reinforcing structure 22 is disposed. The reinforcing structure 22 is fixedly connected to the side beam 20 to divide the assembly cavity 21 into a plurality of sub-cavities 23. The first sub-fastener 31 is pre-embedded in the side beam 20, and a first sub-fastener 31 penetrates a bottom wall 27 of the side beam 20 and at least one horizontal reinforcing portion 221. The second sealing member 70 is clamped between the side beam 20 and the heat exchange member 40. The reinforcing strip 50 is disposed between the bottom protection plate 10 and the heat exchange member 40 and supports the heat exchange member 40. The first sealing member 60 is clamped between the reinforcing strip 50 and the bottom protection plate 10. The second sub-fastener 32 may sequentially penetrate from below the bottom protection plate 10, the reinforcing strip 50, the heat exchange member 40, and the second sealing member 70 to be screwed to the first sub-fastener 31.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of this application. In this specification, illustrative expressions of these terms do not necessarily refer to the same embodiment or example. Moreover, the specific features, structures, materials, or characteristics described may be combined in a suitable manner in any one or more embodiments or examples.

Although the embodiments of this application have been shown and described, persons of ordinary skill in the art can understand that various changes, modifications, substitutions, and variants of these embodiments may be made without departing from the principle and essence of this application, and the scope of this application is limited by the claims and its equivalents.

## Claims

1. A lower box body of a battery, comprising:
a bottom protection plate;
a side beam, wherein the bottom protection plate and the side beam jointly define a mounting space for mounting a battery cell of the battery, an assembly cavity is provided in the side beam, a reinforcing structure is disposed in the assembly cavity, and the reinforcing structure and the side beam are integrally formed to divide the assembly cavity into a plurality of sub-cavities; and
a fastener, wherein the fastener penetrates a bottom wall of the side beam and the bottom protection plate and is connected to the reinforcing structure, so as to assemble the bottom protection plate at the side beam.

2. The lower box body of the battery according to claim 1, wherein the reinforcing structure comprises a horizontal reinforcing portion, the horizontal reinforcing portion is connected between an inner side wall and an outer side wall of the side beam, and the fastener is connected to the horizontal reinforcing portion.

3. The lower box body of the battery according to claim 2, wherein such horizontal reinforcing portion is provided in plurality, the plurality of horizontal reinforcing portions are sequentially spaced apart along a height direction of the side beam, and the fastener penetrates at least one of the horizontal reinforcing portions.

4. The lower box body of the battery according to claim 2 or 3, wherein a thickness of the bottom wall and/or a thickness of the inner side wall and/or a thickness of the horizontal reinforcing portion is D1, satisfying a relation: 2 mm≤D1≤5 mm.

5. The lower box body of the battery according to any one of claims 2 to 4, wherein the reinforcing structure further comprises a plurality of vertical reinforcing portions, the plurality of vertical reinforcing portions are sequentially spaced apart along a width direction of the side beam, the vertical reinforcing portions are each connected to at least one of the horizontal reinforcing portions, and at least one of the vertical reinforcing portions is connected to the side beam.

6. The lower box body of the battery according to claim 5, wherein along the width direction of the side beam, a spacing distance between at least two adjacent vertical reinforcing portions of the plurality of the vertical reinforcing portions is L, satisfying a relation: 2 mm≤L≤5 mm.

7. The lower box body of the battery according to any one of claims 1 to 6, wherein the lower box body further comprises a heat exchange member, the heat exchange member is disposed in the mounting space, and an edge of the heat exchange member is disposed between the side beam and the bottom protection plate.

8. The lower box body of the battery according to claim 7, wherein the edge of the heat exchange member is provided with an avoidance portion for avoiding the fastener, and the fastener penetrates the avoidance portion.

9. The lower box body of the battery according to claim 7 or 8, wherein the lower box body further comprises a reinforcing strip, the reinforcing strip is disposed between the heat exchange member and the bottom protection plate, the fastener penetrates the reinforcing strip, and the reinforcing strip supports a lower surface of the heat exchange member.

10. The lower box body of the battery according to claim 9, wherein the reinforcing strip comprises a support portion, the support portion is located in the mounting space, and the support portion supports the heat exchange member.

11. The lower box body of the battery according to claim 10, wherein the lower box body further comprises a first sealing member, and the first sealing member is clamped between the reinforcing strip and the bottom protection plate.

12. The lower box body of the battery according to claim 11, wherein the reinforcing strip further comprises a connection portion and an assembly portion, the connection portion is connected between the assembly portion and the support portion, such that the assembly portion is staggered with the support portion in a thickness direction of the reinforcing strip, the fastener penetrates the assembly portion, and the first sealing member is clamped between the assembly portion and the bottom protection plate.

13. The lower box body of the battery according to claim 11 or 12, wherein an inner surface of the bottom protection plate has a mounting groove, and the first sealing member is mounted in the mounting groove.

14. The lower box body of the battery according to claim 7, wherein the lower box body further comprises a second sealing member, the second sealing member is clamped between the heat exchange member and the side beam, and the fastener penetrates the second sealing member.

15. The lower box body of the battery according to any one of claims 1 to 14, wherein such fastener is provided in plurality, the plurality of fasteners are sequentially spaced apart along a circumferential direction of the lower box body, and a spacing distance between adjacent two of the fasteners is D2, satisfying 40 mm≤D2≤100 mm.

16. The lower box body of the battery according to any one of claims 1 to 14, wherein the bottom protection plate is disposed below the side beam, and a turnup bending towards the side beam is provided at an edge of the bottom protection plate.

17. The lower box body of the battery according to claim 16, wherein a surface of the side beam opposite the turnup has an avoidance groove, and the avoidance groove is opposite the turnup.

18. A battery, comprising:
an upper cover;
a lower box body, wherein this lower box body is the lower box body of the battery according to any one of claims 1 to 17, and the upper cover is connected to the lower box body to seal an opening end of the mounting space; and
a battery cell, wherein the battery cell is mounted in the mounting space.

19. An electric apparatus, comprising the battery according to claim 18.
